# EUROPEAN PATENT APPLICATION

(11) **EP 4 395 010 A1**
(43) Date of publication of application: **03.07.2024**
(21) Application number: 21955068.8
(22) Date of filing: 27.08.2021
(51) Int. Cl.: H01M 10/647, H01M 10/655, H01M 10/658, H01M 50/204

(54) **FIRE SPREADING PREVENTION UNIT AND BATTERY PROVIDED WITH SAME**

(71) Applicant: Shin-Etsu Polymer Co., Ltd., Tokyo 100-0004 (JP)
(72) Inventor: ANDO, Hitoshi, Tokyo 101-0041 (JP); HOSOYA, Sukemasa, Tokyo 101-0041 (JP)
(74) Representative: Arnold & Siedsma
(86) International application number: PCT/JP2021/031461
(87) International publication number: WO 2023/026458

(57) **Abstract**

To provide: a fire spreading prevention unit that prevents fire spreading by reducing thermal conduction between heat sources during a rise in temperature of the heat sources, that is not easily damaged during expansion of the heat sources, and that can actively dissipate heat from the heat sources; and a battery provided with the same. The present invention relates to: a fire spreading prevention unit 1 including fire spreading prevention sheets 20 each disposed to be sandwiched between a plurality of heat sources, and a thermally conductive member 10 disposed between a member to which heat from the heat sources is to be transferred and the heat sources, wherein the fire spreading prevention sheets 20 are multilayer sheets each obtained by laminating one or two or more rubber sheets 23, one or two or more heat resistant sheets 21, and one or two or more thermally conductive sheets 22, the thermally conductive sheets 22 each have a protrusion 25 that protrudes beyond the rubber sheets 23 and the heat resistant sheets 21 and that exposes both surfaces in a thickness direction of the thermally conductive sheet 22, and the fire spreading prevention sheet 20 is erected on the thermally conductive member 10 in a state where the protrusion 25 is brought into contact with the thermally conductive member 10; and a battery provided with the fire spreading prevention unit.

## Description

### Cross-reference

Contents described in patents, patent applications, and documents cited in the present application are incorporated by reference into this specification.

### Technical Field

The present invention relates to a fire spreading prevention unit and to a battery provided with the same.

### Background Art

Currently, with a goal of reducing burdens on the global environment, there is an intensifying worldwide effort to gradually shift from conventional gasoline-powered vehicles and diesel-powered vehicles to electric vehicles. In particular, electric vehicles are becoming popular in European countries such as France, the Netherlands, and Germany as well as in China. The popularization of electric vehicles presents challenges such as development of high-performance batteries and installation of a large number of charging stations.

Various batteries including the car batteries described above carry a risk of thermal runaway due to an internal short-circuit or the like which may result in ignition, smoke generation, and the like. In recent years, car batteries in which a plurality of battery cells are mounted side by side in an enclosure are known. When ignition, smoke generation, or the like occurs in one battery cell in a battery in which a plurality of battery cells are mounted side by side in this manner, there is a risk that transfer of heat to surrounding battery cells may lead to a greater failure such as ignition, smoke generation, or explosion. Methods of reducing transfer of heat from a battery cell having reached an abnormally high temperature to surrounding battery cells are being studied in order to minimize damage due to such failure. For example, a method of providing a fire spreading prevention member such as a refractory material or a heat insulating layer between the plurality of battery cells is known (refer to Patent Literature 1).

### Citation List

### Patent Literature

Patent Literature 1: Japanese Patent Laid-Open No. 2018-206604

### Summary of Invention

### Technical Problem

A temperature of a battery cell rises during charging and discharging. A part of the battery cell may become excessively hot. In such cases, thermal conduction between battery cells must be reduced. In addition, due to the temperature rise of the battery cell, the battery cell and particularly a side surface thereof may possibly expand. Therefore, the fire spreading prevention member between the battery cells is required not to break when a battery cell expands. Furthermore, preferably, not only is the thermal conduction between battery cells reduced but the heat is actively released to the outside to cool the battery cells. This demand applies not only to battery cells but also to other heat sources such as a circuit substrate, an electronic component, and an electronic equipment main body. Moreover, meeting such a demand is also conducive to achieving a sustainable development objective of the present applicant of "securing access by all to sustainable modern energy that is both inexpensive and reliable".

The present invention has been made in consideration of the problem described above and an object thereof is to provide: a fire spreading prevention unit that prevents fire spreading by reducing thermal conduction between heat sources during a rise in temperature of the heat sources, that is not easily damaged during expansion of the heat sources, and that can actively dissipate heat from the heat sources; and a battery provided with the same.

### Solution to Problem

(1) A fire spreading prevention unit according to an embodiment for achieving the object described above includes: a fire spreading prevention sheet disposed to be sandwiched between a plurality of heat sources; and
   a thermally conductive member disposed between a member to which heat from the heat sources is to be transferred and the heat sources, wherein
   the fire spreading prevention sheet is a multilayer sheet obtained by laminating:
      one or two or more rubber sheets;
      one or two or more heat resistant sheets with higher heat resistance than the rubber sheets; and
      one or two or more thermally conductive sheets with higher thermal conductivity than the rubber sheets and the heat resistant sheets,
      the thermally conductive sheets each have a protrusion that protrudes beyond the rubber sheets and the heat resistant sheets and that exposes both surfaces in a thickness direction of the thermally conductive sheet, and
   the fire spreading prevention sheet is erected on the thermally conductive member in a state where the protrusion of the thermally conductive sheet is brought into contact with the thermally conductive member.
(2) In a fire spreading prevention unit according to another embodiment, preferably, the thermally conductive member includes, in a rubber-like elastic body, a thermally conductive filler with higher thermal conductivity than the rubber-like elastic body, and
   the protrusion may be inserted into the thermally conductive member from a surface thereof.
(3) In a fire spreading prevention unit according to another embodiment, preferably, the thermally conductive member is provided with a molded body made of rubber or resin as a main material and a thermally conductive film with higher thermal conductivity than the molded body,
   the thermally conductive film is exposed on an outer surface of the molded body, and
   the protrusion may be connected to the thermally conductive film.
(4) In a fire spreading prevention unit according to another embodiment, preferably, the rubber sheet may be a porous sponge sheet.
(5) In a fire spreading prevention unit according to another embodiment, preferably, the heat resistant sheet may be a sheet containing talc and/or silica.
(6) In a fire spreading prevention unit according to another embodiment, preferably, the thermally conductive sheet may be a sheet containing graphite and/or an aluminum compound.
(7) In a fire spreading prevention unit according to another embodiment, preferably, the multilayer sheet forms a bag having both surfaces in a thickness direction thereof and at least one end surface connecting both surfaces,
   the thermally conductive sheet is disposed inside the bag, and
   the thermally conductive sheet may cause the protrusion to protrude outward by penetrating the bag.
(8) A battery according to an embodiment for achieving the object described above includes:
   battery cells as a plurality of heat sources inside an enclosure, wherein
   the battery is provided with the fire spreading prevention unit of any one of claims 1 to 7 inside the enclosure,
   the fire spreading prevention sheet is sandwiched between the battery cells, and
   the thermally conductive member is sandwiched between the battery cells and a cooling part of the enclosure.

### Advantageous Effects of Invention

The present invention can provide: a fire spreading prevention unit that prevents fire spreading by reducing thermal conduction between heat sources during a rise in temperature of the heat sources, that is not easily damaged during expansion of the heat sources, and that can actively dissipate heat from the heat sources; and a battery provided with the same.

### Brief Description of Drawings

[Figure 1] Figure 1 shows a perspective view of a situation where a fire spreading prevention unit according to a first embodiment is manufactured and an enlarged view of a part B of a thermally conductive member.
[Figure 2] Figure 2 shows a perspective view of a situation after the fire spreading prevention unit shown in Figure 1 is manufactured.
[Figure 3] Figure 3 shows a sectional view taken along line C-C of the fire spreading prevention unit shown in Figure 2 and an enlarged view of a part D.
[Figure 4] Figure 4 shows a sectional view from a same perspective as the C-C sectional view of the first embodiment and an enlarged view of a part E in a fire spreading prevention unit according to a second embodiment.
[Figure 5] Figure 5 shows a sectional view from a same perspective as the C-C sectional view of the first embodiment and an enlarged view of a part F in a fire spreading prevention unit according to a third embodiment.
[Figure 6] Figure 6 shows a sectional view from a same perspective as the C-C sectional view of the first embodiment and an enlarged view of a part G in a fire spreading prevention unit according to a fourth embodiment.
[Figure 7] Figure 7 shows a sectional view from a same perspective as the C-C sectional view of the first embodiment in a fire spreading prevention unit according to a fifth embodiment and a fire spreading prevention sheet constituting the fire spreading prevention unit, and a plan view and a right-side view of a thermally conductive member constituting the fire spreading prevention unit.
[Figure 8] Figure 8 shows a sectional view from a same perspective as the C-C sectional view of the first embodiment in a fire spreading prevention unit according to a sixth embodiment.
[Figure 9] Figure 9 shows a sectional view from a same perspective as the C-C sectional view of the first embodiment in a fire spreading prevention unit according to a seventh embodiment and a plan view and a right-side view of a thermally conductive member.
[Figure 10] Figure 10 shows a sectional view of fire spreading prevention sheets according to modifications.
[Figure 11] Figure 11 shows a plan view of a thermally conductive member of a fire spreading prevention unit according to an eighth embodiment.
[Figure 12] Figure 12 shows, by a sectional view from a same perspective as the C-C sectional view of the first embodiment, a situation where the fire spreading prevention unit according to the eighth embodiment is manufactured.
[Figure 13] Figure 13 shows a longitudinal sectional view of a battery according to the first embodiment.
[Figure 14] Figure 14 shows a longitudinal sectional view of a battery according to the second embodiment.

### Reference Signs List

- 1, 1a, 1b, 1c, 1d, 1e, 1f, 1g: fire spreading prevention unit
- 10, 30, 40, 50: thermally conductive member
- 11: thermally conductive filler
- 20, 20a, 20b, 20c, 20d, 20e, 20f: fire spreading prevention sheet (multilayer sheet)
- 21: heat resistant sheet
- 22: thermally conductive sheet
- 23: rubber sheet (as an example, sponge sheet)
- 25, 25d: protrusion
- 27: bag
- 31, 41: molded body
- 32, 42, 60: thermally conductive film
- 61: rubber tube (molded body)
- 70, 70a: battery
- 71: enclosure
- 72: bottom part (member to which heat is to be transferred, cooling part)
- 80: battery cell (example of heat source)

### Description of Embodiments

Next, respective embodiments of the present invention will be described with reference to the drawings. Note that the respective embodiments described below are not intended to limit the invention as set forth in the accompanying claims and that all of the elements described in the embodiments and combinations thereof are not necessarily essential to solutions proposed by the present invention.

### 1. Fire spreading prevention unit

### (First embodiment)

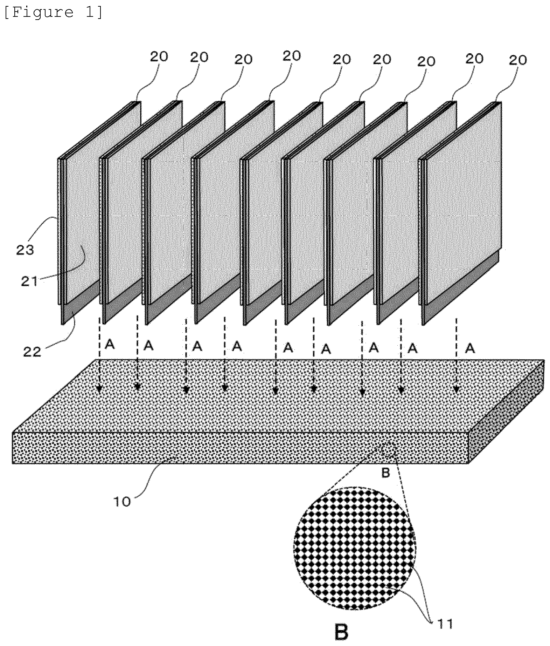

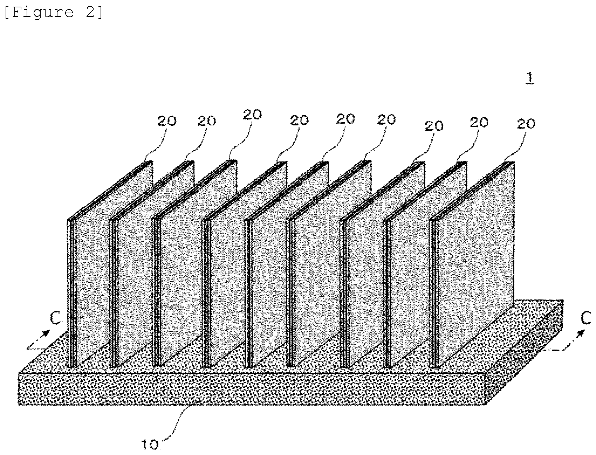

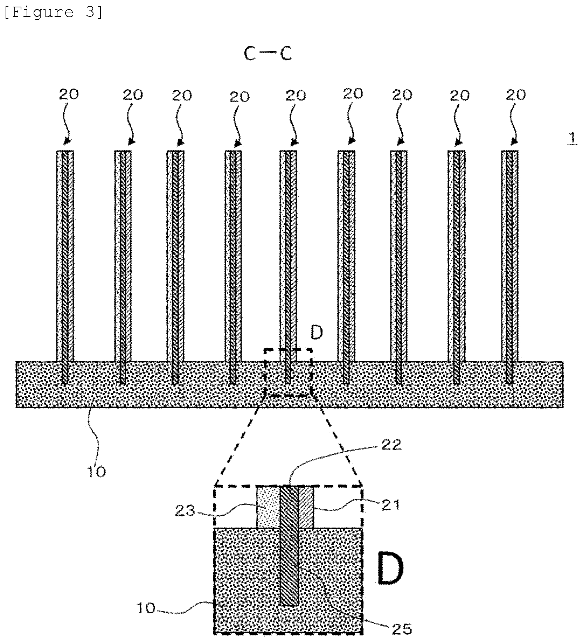

Figure 1 shows a perspective view of a situation where a fire spreading prevention unit according to the first embodiment is manufactured and an enlarged view of a part B of a thermally conductive member. Figure 2 shows a perspective view of a situation after the fire spreading prevention unit shown in Figure 1 is manufactured. Figure 3 shows a sectional view taken along line C-C of the fire spreading prevention unit shown in Figure 2 and an enlarged view of a part D.

A fire spreading prevention unit 1 according to the embodiment is provided with fire spreading prevention sheets 20 each disposed to be sandwiched between a plurality of heat sources and a thermally conductive member 10 disposed between a member to which heat from the heat sources is to be transferred and the heat sources. The fire spreading prevention sheets 20 are erected on the thermally conductive member 10 at predetermined intervals. Heat sources can be disposed at locations of the predetermined intervals. The fire spreading prevention unit 1 can be manufactured by making slits in the thermally conductive member 10 and inserting the fire spreading prevention sheets 20 into the slits. Alternatively, the fire spreading prevention unit 1 may be manufactured by inserting the fire spreading prevention sheets 20 into a member before curing of the thermally conductive member 10 and obtaining the thermally conductive member 10 by curing the member before curing. There are nine fire spreading prevention sheets 20 in this embodiment and subsequent embodiments. As long as there is one or two or more fire spreading prevention sheets 20, the number thereof can be increased or reduced according to the number of heat sources. While there is one thermally conductive member 10 in this embodiment, the number of thermally conductive members 10 is not particularly limited and may be one or two or more.

Each fire spreading prevention sheet 20 is a multilayer sheet obtained by laminating one or two or more rubber sheets 23, one or two or more heat resistant sheets 21, and one or two or more thermally conductive sheets 22. The fire spreading prevention sheet 20 according to this embodiment is a multilayer sheet obtained by laminating one heat resistant sheet 21, one thermally conductive sheet 22, and one rubber sheet 23 in this order. The respective numbers of the heat resistant sheets 21, the thermally conductive sheets 22, and the rubber sheets 23 that constitute the fire spreading prevention sheet 20 need only be one or more. In addition, a method of laminating adjacent sheets is not particularly constrained and a lamination method of interposing connecting means such as an adhesive, a pressure-sensitive adhesive, or a double-sided adhesive tape or a method that does not involve interposing the connecting means (for example, crimping) may be adopted.

The heat resistant sheet 21 is a sheet with higher heat resistance than the rubber sheet 23. The thermally conductive sheet 22 is a sheet with higher thermal conductivity than the rubber sheet 23 and the heat resistant sheet 21.

### (1) Rubber sheet

The rubber sheet 23 is a sheet made of a rubber-like elastic body. Terms such as "elastic body" and "cushioning member" may be used in place of the term "rubber-like elastic body". The rubber sheet 23 functions as a protective member that exhibits cushioning characteristics between a plurality of heat sources and prevents the heat resistant sheet 21 from breaking due to a load applied to the heat resistant sheet 21 and also deforms with an expansion of the heat sources. In addition, in this embodiment, the rubber sheet 23 also enables the fire spreading prevention sheet 20 and a heat source that comes into contact with the fire spreading prevention sheet 20 to become readily integrated.

While the rubber sheet 23 may be any of a sponge-like member with internal bubbles and a rubber-like elastic body without any bubbles, the rubber sheet 23 is more preferably a sponge-like member. Preferably, the rubber sheet 23 is constructed to contain: a thermosetting elastomer such as silicone rubber, urethane rubber, isoprene rubber, ethylene-propylene rubber, natural rubber, ethylene-propylene-diene rubber, nitrile rubber (NBR), or styrene-butadiene rubber (SBR); a thermoplastic elastomer that is urethane-based, ester-based, styrene-based, olefin-based, butadiene-based, fluorine-based, or the like; or a combination of these compounds.

Preferably, the rubber sheet 23 is heat resistant to such a degree that the rubber sheet 23 does not readily melt, decompose, or the like due to heat transferred from the heat source and can maintain its form. In this embodiment, preferably, the rubber sheet 23 is a porous sponge sheet. This is because holes in the sheet contain air that provides a superior heat insulation effect. In addition, preferably, the rubber sheet 23 is a sheet that mainly contains silicone rubber. This is because silicone rubber can withstand heat up to around 200°C. In the present application, "mainly" or a "main material" means a ratio exceeding 50% by mass of a whole. More preferably, the rubber sheet 23 is a sponge sheet made of silicone rubber. In terms of Shore A hardness, the rubber sheet 23 preferably has a hardness of 20 to 80 and more preferably has a hardness of 30 to 70. In order to enhance flame retardancy, the rubber sheet 23 may be constructed by dispersing flame-retardant material such as carbon or boric acid in rubber. While a thickness of the rubber sheet 23 is not constrained, the thickness preferably ranges from 2 to 20 mm and more preferably from 3 to 8 mm. Preferably, the rubber sheet 23 is a thickest layer among the layers constituting the fire spreading prevention sheet 20. Accordingly, breakage of the heat resistant sheet 21 or the thermally conductive sheet 22 that constitute the fire spreading prevention sheet 20 can be reduced. However, the thickness of the rubber sheet 23 is preferably determined by comprehensively considering strength, flexibility, and heat resistance of the sheet. When the rubber sheet 23 is constructed as a solid rubber sheet, the rubber sheet 23 is preferably provided with recesses or grooves on one face or both faces or holes that penetrate the rubber sheet 23 in a thickness direction. This is because air inside the recesses, grooves, or holes exhibits a heat insulation effect. In addition, one face or both faces of the rubber sheet 23 may be given a mirror finish.

### (2) Thermally conductive sheet

The thermally conductive sheets 22 each has a protrusion 25 that protrudes beyond the rubber sheets 23 and the heat resistant sheets 21 and that exposes both surfaces in a thickness direction of the thermally conductive sheet 22. The fire spreading prevention sheet 20 is inserted into the thermally conductive member 10 with the protrusion 25 facing the thermally conductive member 10 (refer to arrow A in Figure 1). The fire spreading prevention sheet 20 is erected on the thermally conductive member 10 in a state where the protrusion 25 of the thermally conductive sheet 22 is brought into contact with the thermally conductive member 10. The protrusion 25 is a location that exposes the thermally conductive sheet 22 without being covered by the rubber sheet 23 and the heat resistant sheet 21. Therefore, heat transferred from the heat sources to the thermally conductive sheet 22 can be promptly transferred to the thermally conductive member 10. In other words, the thermally conductive sheet 22 functions as a heat transport passage in the fire spreading prevention sheet 20.

The thermally conductive sheet 22 may be a sheet made of carbon (such as graphite), Al₂O₃, AlN, cBN, or hBN, a resin sheet containing carbon, Al₂O₃, AlN, cBN, or hBN as a filler, or a paper sheet containing the filler. An example of the resin is aramid fiber. More preferably, the thermally conductive sheet 22 is a sheet containing graphite and/or an aluminum compound. In this embodiment, preferably, the thermally conductive sheet 22 is a graphite sheet or a sheet obtained by dispersing graphite as a filler in resin. While a thickness of the thermally conductive sheet 22 is not constrained, the thickness preferably ranges from 0.05 to 3 mm and more preferably from 0.08 to 0.6 mm. However, the thickness of the thermally conductive sheet 22 is preferably determined by comprehensively considering strength, flexibility, and heat resistance of the sheet.

### (3) Heat resistant sheet

Preferably, the heat resistant sheet 21 has a function of effectively preventing fire spreading between heat sources. Although any constituent material may be used, preferably, the heat resistant sheet 21 is a sheet mainly containing talc. For example, the heat resistant sheet 21 may be a sheet containing talc and resin (or paper). Examples of the resin include aramid fiber. A content by percentage of talc in the heat resistant sheet 21 preferably ranges from 55 to 99% by mass and more preferably ranges from 75 to 90% by mass. Generally, talc is a ceramic with hydrated magnesium silicate as a main component and contains a small amount of impurities such as ferric oxide. While a type and an amount of the impurities differ depending on where rough talc was produced, the talc contained in the heat resistant sheet 21 is not limited in such aspects. For example, talc subjected to surface treatment by known surface preparation agents such as organic silane-based compounds, organic borane-based compounds, epoxy-based compounds, organic titanate-based compounds, and isocyanate-based compounds may be used. The heat resistant sheet 21 may contain only one type of the talc described above or contain two or more types of talc of which particle sizes, types, surface preparation agents, or the like differ from each other.

Preferably, the heat resistant sheet 21 is a sheet with superior heat resistance and flame retardancy. The heat resistant sheet 21 is not limited to a sheet mainly containing talc and need only be constituted of a material with higher heat resistance and higher flame retardancy than at least the rubber sheet 23. Examples of such a material include materials with relatively low thermal conductivity such as silica, mullite, cordierite, steatite, forsterite, titania, and zirconia. More preferably, the heat resistant sheet 21 is a sheet containing talc described above and/or silica described above. Conductivity of the heat resistant sheet 21 is not an issue. The heat resistant sheet 21 is preferably a sheet with superior curving properties (or bending properties), and while a thickness of the heat resistant sheet 21 is not constrained, the thickness preferably ranges from 0.05 to 2.0 mm and more preferably from 0.1 to 1.0 mm. Preferably, the thickness of the heat resistant sheet 21 is smaller than that of the rubber sheet 23. However, the thickness of the heat resistant sheet 21 is preferably determined by comprehensively considering strength, flexibility, and heat resistance of the sheet.

### (4) Thermally conductive member

The thermally conductive member 10 is a member disposed between a member (for example, a cooling part) to which heat is to be dissipated from the heat sources and the heat sources. In this embodiment, in the thermally conductive member 10, a rubber-like elastic body contains a thermally conductive filler 11 with higher thermal conductivity than the rubber-like elastic body (refer to enlarged view of the part B in Figure 1). Preferably, the rubber-like elastic body is selected from the same options as the rubber constituting the rubber sheet 23. As the rubber-like elastic body that constitutes the thermally conductive member 10, silicone rubber with relatively superior heat resistance is preferable. As the thermally conductive filler 11, a metal such as Al or Cu can be used in addition to carbon (such as graphite), Al₂O₃, AlN, cBN, or hBN. A ferromagnetic filler such as iron, cobalt, or nickel may be used as the metal.

The protrusion 25 of the thermally conductive sheet 22 is inserted into the thermally conductive member 10 from a surface thereof. Besides being inserted to a midway position in the thickness direction of the thermally conductive member 10, the protrusion 25 may be inserted along an entire length in the thickness direction. In addition, parts of the heat resistant sheet 21 and/or the rubber sheet 23 may be inserted into the thermally conductive member 10 in addition to the protrusion 25.

### (Second embodiment)

Next, a fire spreading prevention unit according to a second embodiment will be described. Redundant descriptions of portions in common with the embodiment described above will be omitted.

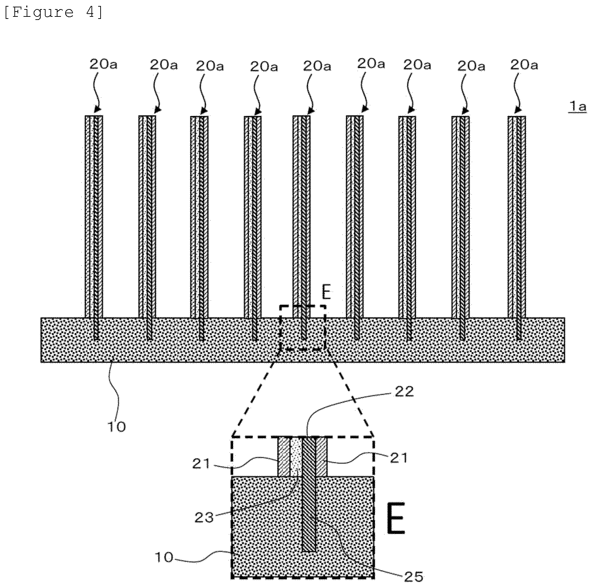

Figure 4 shows a sectional view from a same perspective as the C-C sectional view of the first embodiment and an enlarged view of a part E in the fire spreading prevention unit according to the second embodiment.

A fire spreading prevention unit 1a according to the second embodiment is provided with fire spreading prevention sheets 20a each disposed to be sandwiched between a plurality of heat sources and the thermally conductive member 10 disposed between a member to which heat from the heat sources is to be transferred and the heat sources. The fire spreading prevention sheets 20a are erected on the thermally conductive member 10 at predetermined intervals. The fire spreading prevention sheets 20a according to this embodiment each have two heat resistant sheets 21, one thermally conductive sheet 22, and one rubber sheet 23. More specifically, the fire spreading prevention sheets 20a are multilayer sheets each obtained by laminating one heat resistant sheet 21, one thermally conductive sheet 22, one rubber sheet 23, and one heat resistant sheet 21 in this order. The heat resistant sheets 21 constitute two outermost layers of the fire spreading prevention sheet 20a. Therefore, the resultant fire spreading prevention sheets 20a are sheets that provide a superior fire spreading prevention effect. The protrusion 25 of the thermally conductive sheet 22 protrudes outward beyond the two heat resistant sheets 21 and the one rubber sheet 23. The fire spreading prevention sheets 20a are erected on the thermally conductive member 10 by inserting the protrusions 25 into the thermally conductive member 10. Since points other than those described above are in common with the first embodiment, redundant descriptions will be omitted.

### (Third embodiment)

Next, a fire spreading prevention unit according to a third embodiment will be described. Redundant descriptions of portions in common with the embodiments described above will be omitted.

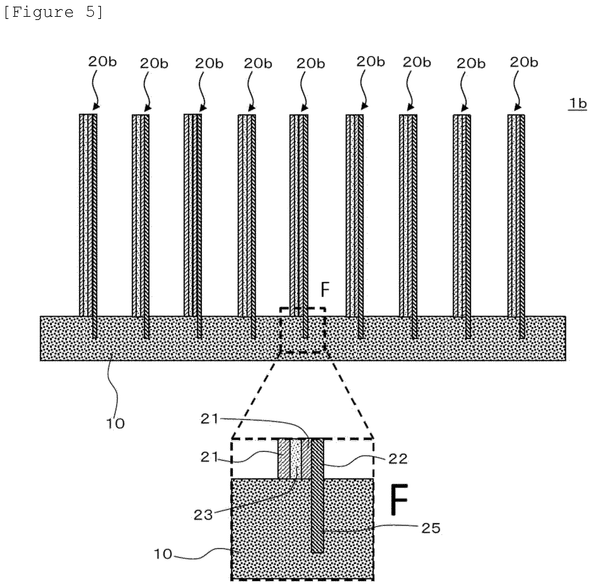

Figure 5 shows a sectional view from a same perspective as the C-C sectional view of the first embodiment and an enlarged view of a part F in the fire spreading prevention unit according to the third embodiment.

A fire spreading prevention unit 1b according to the third embodiment is provided with fire spreading prevention sheets 20b each disposed to be sandwiched between a plurality of heat sources and the thermally conductive member 10 disposed between a member to which heat from the heat sources is to be transferred and the heat sources. The fire spreading prevention sheets 20b are erected on the thermally conductive member 10 at predetermined intervals. The fire spreading prevention sheets 20b according to this embodiment each have two heat resistant sheets 21, one thermally conductive sheet 22, and one rubber sheet 23. More specifically, the fire spreading prevention sheets 20b are multilayer sheets each obtained by laminating one thermally conductive sheet 22, one heat resistant sheet 21, one rubber sheet 23, and one heat resistant sheet 21 in this order. The thermally conductive sheet 22 constitutes one of the outermost layers of the fire spreading prevention sheet 20b. Therefore, the fire spreading prevention sheet 20b can promptly transfer heat from one heat source to the thermally conductive member 10. The protrusion 25 of the thermally conductive sheet 22 protrudes outward beyond the two heat resistant sheets 21 and the one rubber sheet 23. The fire spreading prevention sheets 20b are erected on the thermally conductive member 10 by inserting the protrusions 25 into the thermally conductive member 10. Since points other than those described above are in common with the respective embodiments described earlier, redundant descriptions will be omitted.

### (Fourth embodiment)

Next, a fire spreading prevention unit according to a fourth embodiment will be described. Redundant descriptions of portions in common with the embodiments described above will be omitted.

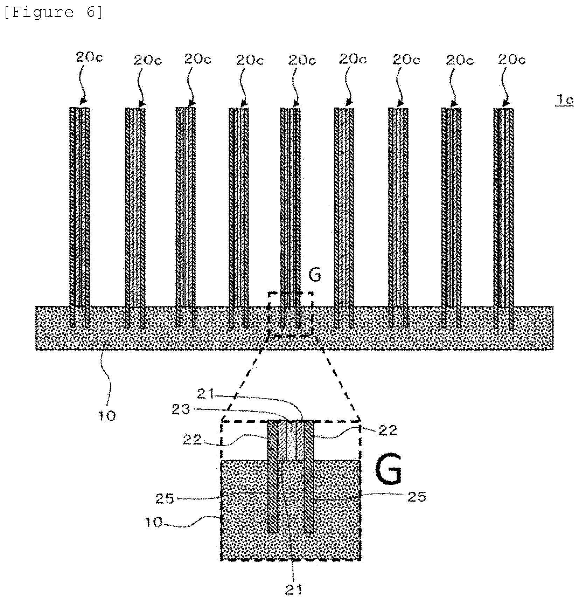

Figure 6 shows a sectional view from a same perspective as the C-C sectional view of the first embodiment and an enlarged view of a part G in the fire spreading prevention unit according to the fourth embodiment.

A fire spreading prevention unit 1c according to the fourth embodiment is provided with fire spreading prevention sheets 20c each disposed to be sandwiched between a plurality of heat sources and the thermally conductive member 10 disposed between a member to which heat from the heat sources is to be transferred and the heat sources. The fire spreading prevention sheets 20c are erected on the thermally conductive member 10 at predetermined intervals. The fire spreading prevention sheets 20c according to this embodiment each have two heat resistant sheets 21, two thermally conductive sheets 22, and one rubber sheet 23. More specifically, the fire spreading prevention sheets 20c are multilayer sheets each obtained by laminating one thermally conductive sheet 22, one heat resistant sheet 21, one rubber sheet 23, one heat resistant sheet 21, and one thermally conductive sheet 22 in this order. The thermally conductive sheets 22 constitute two outermost layers of each fire spreading prevention sheet 20c. Therefore, the fire spreading prevention sheet 20c can more promptly transfer heat from the heat sources sandwiching the sheet 20c to the thermally conductive member 10. The protrusions 25 of the thermally conductive sheets 22 protrude outward beyond the two heat resistant sheets 21 and the one rubber sheet 23. The fire spreading prevention sheet 20c is erected on the thermally conductive member 10 by inserting the two protrusions 25 into the thermally conductive member 10. Since points other than those described above are in common with the respective embodiments described earlier, redundant descriptions will be omitted.

### (Fifth embodiment)

Next, a fire spreading prevention unit according to a fifth embodiment will be described. Redundant descriptions of portions in common with the embodiments described above will be omitted.

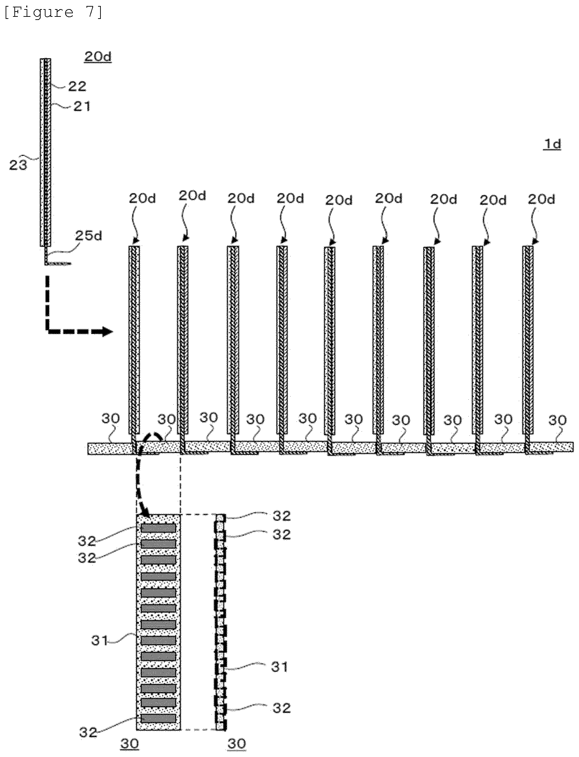

Figure 7 shows a sectional view from a same perspective as the C-C sectional view of the first embodiment in the fire spreading prevention unit according to the fifth embodiment and a fire spreading prevention sheet constituting the fire spreading prevention unit, and a plan view and a right-side view of a thermally conductive member constituting the fire spreading prevention unit.

A fire spreading prevention unit 1d according to the fifth embodiment is provided with fire spreading prevention sheets 20d each disposed to be sandwiched between a plurality of heat sources and a thermally conductive member 30 disposed between a member to which heat from the heat sources is to be transferred and the heat sources. The fire spreading prevention sheets 20d are erected on the thermally conductive member 30 at predetermined intervals. While the fire spreading prevention sheets 20d according to this embodiment each have a same layer structure as the fire spreading prevention sheets 20 according to the first embodiment, the fire spreading prevention sheets 20d differ from the fire spreading prevention sheets 20 in that a protrusion 25d of the thermally conductive sheet 22 is bent in an L-shape in a sectional view.

The thermally conductive member 30 is not the single thermally conductive member 10 that constitutes the fire spreading prevention unit 1 according to the first embodiment but, instead, 10 plate-shaped members. Figure 7 shows a plan view and a right-side view of one of the plate-shaped thermally conductive members 30. The thermally conductive member 30 is provided with a molded body 31 made of rubber or resin as a main material and a thermally conductive film 32 with higher thermal conductivity than the molded body 31. Preferably, the molded body 31 is made of similar options to the rubber of the rubber sheet 23. Preferably, the thermally conductive film 32 is a carbon film with carbon (including graphite) as a main material or a film obtained by dispersing a thermally conductive filler (a filler such as carbon, metal, or ceramics) in a resin.

The thermally conductive film 32 is exposed on an outer surface of the molded body 31. More specifically, the molded body 31 has a thin rectangular parallelepiped shape. The thermally conductive film 32 with a band shape is fixed while proceeding in a length direction (a direction of a longest side) of the molded body 31 in a bellows-like pattern and being alternately exposed on a front-side surface and a rear-side surface in a thickness direction of the molded body 31. The protrusion 25d is fixed to the thermally conductive member 30 to come into contact with side surfaces and a bottom surface of the thermally conductive member 30 and to come into contact with the thermally conductive film 32. A method of fixing the protrusion 25d and the thermally conductive member 30 is not particularly constrained and a method of interposing an adhesive, a pressure-sensitive adhesive, or a double-sided adhesive tape or a method such as crimping that does not involve an interposed object may be adopted.

### (Sixth embodiment)

Next, a fire spreading prevention unit according to a sixth embodiment will be described. Redundant descriptions of portions in common with the embodiments described above will be omitted.

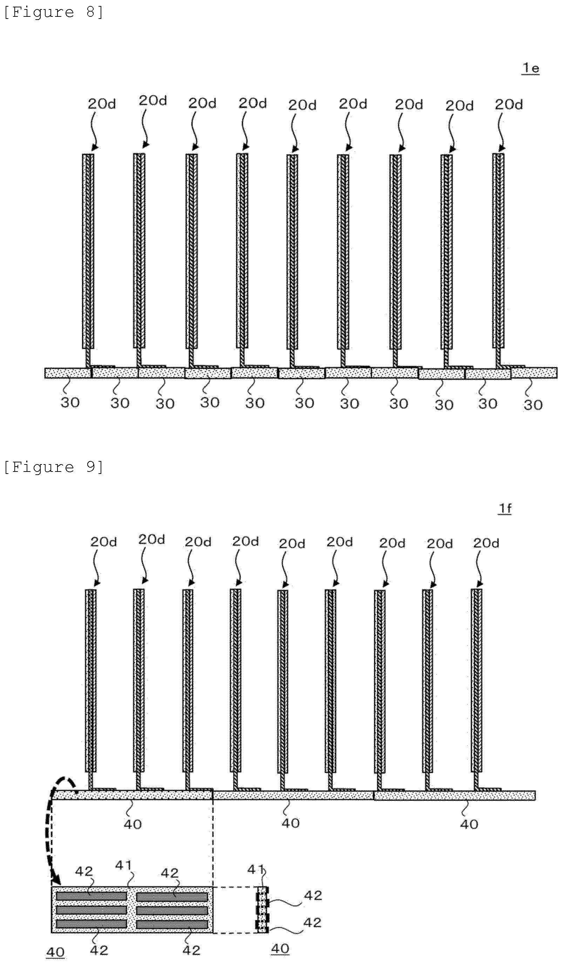

Figure 8 shows a sectional view from a same perspective as the C-C sectional view of the first embodiment in the fire spreading prevention unit according to the sixth embodiment.

A fire spreading prevention unit 1e according to the sixth embodiment has a similar configuration to the fire spreading prevention unit 1d according to the fifth embodiment with the exception of having the fire spreading prevention sheets 20d of the fifth embodiment being fixed to the thermally conductive film 32 on the front-side surface of the thermally conductive member 30. In this manner, the protrusion 25d may be fixed to the front-side surface of the thermally conductive member 30. The thermally conductive member 30 may be a single member with the same structure as that described above.

### (Seventh embodiment)

Next, a fire spreading prevention unit according to a seventh embodiment will be described. Redundant descriptions of portions in common with the embodiments described above will be omitted.

Figure 9 shows a sectional view from a same perspective as the C-C sectional view of the first embodiment in the fire spreading prevention unit according to the seventh embodiment and a plan view and a right-side view of a thermally conductive member.

A fire spreading prevention unit 1f according to the seventh embodiment has a similar configuration to the fire spreading prevention unit 1e according to the sixth embodiment with the exception of changing the thermally conductive member 30 of the sixth embodiment to a thermally conductive member 40. There are a total of 15 thermally conductive members 40, with three in a direction in which the fire spreading prevention sheets 20d are lined up and five in a depth direction of a paper plane. However, there are no constraints on the number of the thermally conductive members 40.

Figure 9 shows a plan view and a right-side view of one of the thermally conductive members 40 with a plate shape. The thermally conductive member 40 is provided with a molded body 41 made of rubber or resin as a main material and a thermally conductive film 42 with higher thermal conductivity than the molded body 41. Preferably, the molded body 41 is made of similar options to the rubber of the rubber sheet 23. Preferably, the thermally conductive film 42 is a carbon film with carbon (including graphite) as a main material or a film obtained by dispersing a thermally conductive filler (a filler such as carbon, metal, or ceramics) in a resin.

The thermally conductive film 42 is exposed on an outer surface of the molded body 41. More specifically, the molded body 41 has a thin rectangular parallelepiped shape. The thermally conductive film 42 with a band shape is fixed while proceeding in a width direction (a direction of a second-longest side) of the molded body 41 in a bellows-like pattern and being alternately exposed on a front-side surface and a rear-side surface in a thickness direction of the molded body 41. The thermally conductive film 42 is fixed in two rows in a length direction (a direction of a longest side) of the molded body 41. The protrusion 25d is fixed to a front-side surface of the thermally conductive member 40 to come into contact with the thermally conductive film 42 of the thermally conductive member 40. A method of fixing the protrusion 25d and the thermally conductive member 40 is not particularly constrained and a method of interposing an adhesive, a pressure-sensitive adhesive, or a double-sided adhesive tape or a method such as crimping that does not involve an interposed object may be adopted. The protrusion 25d may be fixed to the rear-side surface of the thermally conductive member 40. The thermally conductive member 40 may be a single member with the same structure as that described above.

### (Modifications)

Next, modifications of a fire spreading prevention sheet that constitutes a fire spreading prevention unit will be described.

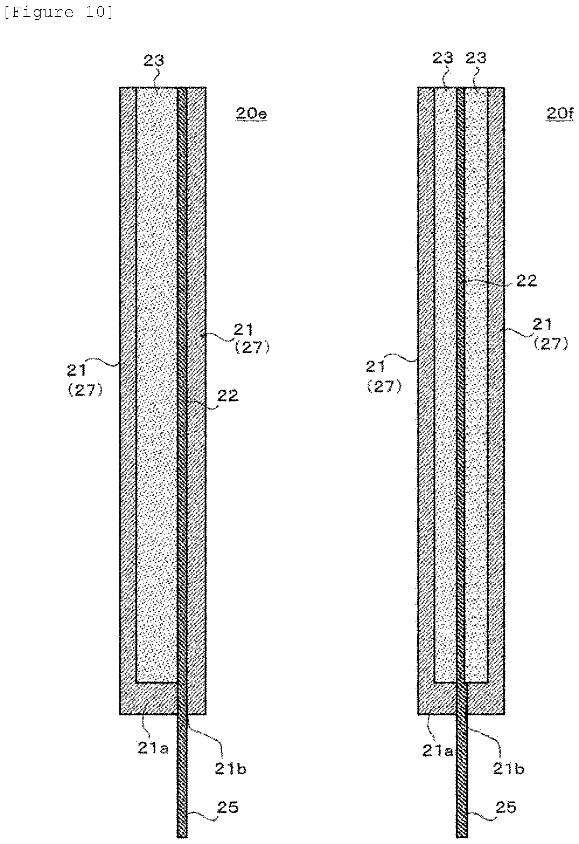

Figure 10 shows a sectional view of the fire spreading prevention sheets according to the modifications.

A fire spreading prevention sheet 20e according to a first modification is a multilayer sheet constituted of four layers: the heat resistant sheet 21, the thermally conductive sheet 22, the rubber sheet 23, and the heat resistant sheet 21. The multilayer sheet forms a bag 27 having both surfaces in a thickness direction thereof and one end surface 21a connecting both surfaces. In other words, the bag 27 is formed by the heat resistant sheets 21. The thermally conductive sheet 21 and the rubber sheet 23 are disposed inside the bag 27. The thermally conductive sheet 21 causes the protrusion 25 to protrude outward by penetrating the bag 27 from an opening 21b formed in a part of the end surface 21a.

A fire spreading prevention sheet 20f according to a second modification is a multilayer sheet constituted of five layers: the heat resistant sheet 21, the rubber sheet 23, the thermally conductive sheet 22, the rubber sheet 23, and the heat resistant sheet 21. The configuration of the fire spreading prevention sheet 20f is otherwise similar to that of the fire spreading prevention sheet 20e according to the first modification. Note that the bag 27 may be formed by the rubber sheets 23 instead of the heat resistant sheets 21. In addition, the bag 27 has a form in which only a surface (an upper end surface in Figure 10) opposing the end surface 21a is open. However, the upper end surface may be closed. The bag 27 may have a form in which a periphery thereof is completely closed.

### (Eighth embodiment)

Next, a fire spreading prevention unit according to an eighth embodiment will be described. Redundant descriptions of portions in common with the embodiments described above will be omitted.

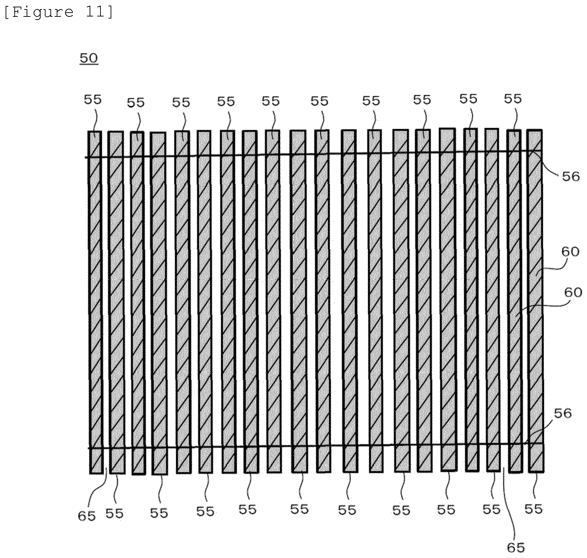

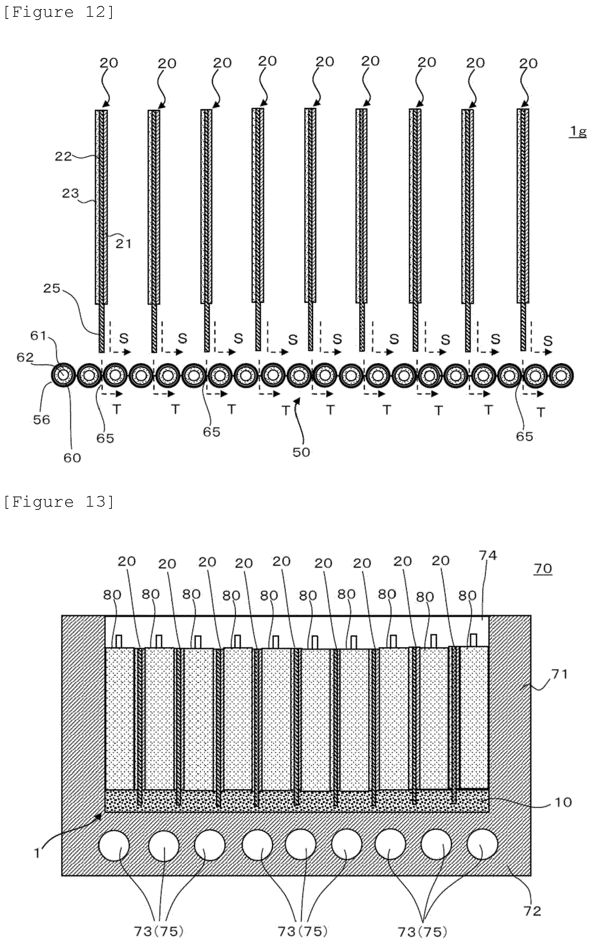

Figure 11 shows a plan view of a thermally conductive member of the fire spreading prevention unit according to the eighth embodiment. Figure 12 shows, by a sectional view from a same perspective as the C-C sectional view of the first embodiment, a situation where the fire spreading prevention unit according to the eighth embodiment is manufactured.

A thermally conductive member 50 constituting a fire spreading prevention unit 1g according to the eighth embodiment is provided with a rubber tube 61 that is an example of a molded body made of rubber or resin as a main material and a thermally conductive film 60 with higher thermal conductivity than the rubber tube 61. The thermally conductive film 60 is exposed on an outer surface of the rubber tube 61. Hereinafter, a more specific configuration of the thermally conductive member 50 will be described.

The thermally conductive member 50 has a form in which a plurality of elongated tubular bodies 55 are lined up and coupled to each other. In this embodiment, the thermally conductive member 50 is provided with 20 tubular bodies 55. However, the number of tubular bodies 55 is not limited to 20 and need only be two or more. In this embodiment, strings 56 are adopted as means to couple the tubular bodies 55 to each other. However, coupling means other than the strings 56 may be used. The thermally conductive member 50 has gaps 65 between the tubular bodies 55. The gaps 65 are spaces necessary for the tubular bodies 55 to collapse when the thermally conductive member 50 is compressed in the thickness direction. In addition, the gaps 65 can also act as spaces into which the protrusion 25 of the fire spreading prevention sheets 20 can be inserted.

The tubular bodies 55 each have a form in which the thermally conductive film 60 with a band shape is spirally bound around an outer surface of the rubber tube 61 with a cylindrical shape which has a through passage 62 in a longitudinal direction. A shape of the rubber tube 61 is not limited to a cylindrical shape and may be another shape such as an elliptic cylinder or a rectangular cylinder. The thermally conductive film 60 and the rubber tube 61 may be fixed using any means such as adhesion, welding, and pressure-sensitive adhesion. Preferably, the rubber tube 61 can be formed of a selective rubber material similar to that of the rubber sheet 23. The thermally conductive film 60 can be formed of a selective material similar to that of the thermally conductive film 42 according to the seventh embodiment.

Preferably, the plurality of fire spreading prevention sheets 20 are fixed to the thermally conductive film 60 of the tubular bodies 55 by inserting the protrusions 25 into the gaps 65 of the thermally conductive member 50. A fixing method of the protrusions 25 and the thermally conductive film 60 is not particularly constrained and examples of the fixing method include adhesion, pressure-sensitive adhesion, and fitting. As indicated by a dotted arrow S, the protrusions 25 may be bent in an L-shape and fixed to front-side surfaces of the tubular bodies 55. Alternatively, as indicated by a dotted arrow T, the protrusions 25 may penetrate the thickness direction of the thermally conductive member 50 from the gaps 65, be bent in an L-shape, and be fixed to side surfaces and rear-side surfaces of the tubular bodies 55.

### 2. Battery

Next, preferred embodiments of a battery according to the present invention will be described.

### (First embodiment)

First, a battery according to the first embodiment will be described.

Figure 13 shows a longitudinal sectional view of the battery according to the first embodiment.

In this case, a "longitudinal sectional view" means a cutaway view of a battery 70 in a length direction of battery cells 80 inside an enclosure 71 of the battery 70. While the battery 70 is provided with 10 battery cells 80 in Figure 13, the number of battery cells 80 is not particularly limited.

In this embodiment, the battery 70 is, for example, a car battery. The battery 70 has a bottomed enclosure 71 that opens on one side. Preferably, the enclosure 71 is made of aluminum or an aluminum-based alloy. The battery 70 is provided with the battery cells 80 as a plurality of heat sources inside the enclosure 71. The battery 70 is provided with the fire spreading prevention unit 1 according to the first embodiment inside the enclosure 71. The fire spreading prevention sheets 20 are each sandwiched between the battery cells 80. The thermally conductive member 10 is sandwiched between the battery cells 80 and a bottom part 72 (an example of the cooling part) of the enclosure 71. A type of the battery 70 is not limited and the battery 70 is preferably a lithium-ion battery. An electrode is provided to protrude above each battery cell 80. Preferably, the plurality of battery cells 80 are subjected to forces using a screw or the like inside the enclosure 71 from both sides of the enclosure 71 in a compressing direction so that the battery cells 80 come into close contact with each other (not illustrated). One or a plurality of water-cooled pipes 73 are provided in the bottom part 72 of the enclosure 71 in order to supply cooling water that is an example of a coolant 75. The coolant 75 may be referred to as a cooling medium or a cooling material.

In this manner, the battery 70 interposes the fire spreading prevention sheets 20 between the battery cells 80, interposes the thermally conductive member 10 between the battery cells 80 and the bottom part 72 (a member to which heat is to be transferred) of the enclosure 71, and brings the protrusions 25 of the thermally conductive sheets 22 of the fire spreading prevention sheet 20 into contact with the thermally conductive member 10. Therefore, when one of the battery cells 80 overheats, heat can be transferred from the battery cell 80 to the bottom part 72 via the thermally conductive member 10, thermal conduction from the overheated battery cell 80 to an adjacent battery cell 80 can be reduced, and conducted heat can be transferred from the thermally conductive sheets 22 to the thermally conductive member 10 via the protrusions 25. Of the protrusions 25, not only end surfaces but both surfaces in the thickness direction can also be used as thermal conduction locations. As a result, heat transfer from the fire spreading prevention sheets 20 to the thermally conductive member 10 can be promoted.

The battery 70 may be provided with the fire spreading prevention units 1, 1a, 1b, and 1c. In addition, the fire spreading prevention sheets 20, 20a, 20b, and 20c may be replaced with the fire spreading prevention sheets 20e and 20f according to the modifications.

### (Second embodiment)

Next, a battery according to the second embodiment will be described. Redundant descriptions of portions of the second embodiment in common with the first embodiment will be omitted.

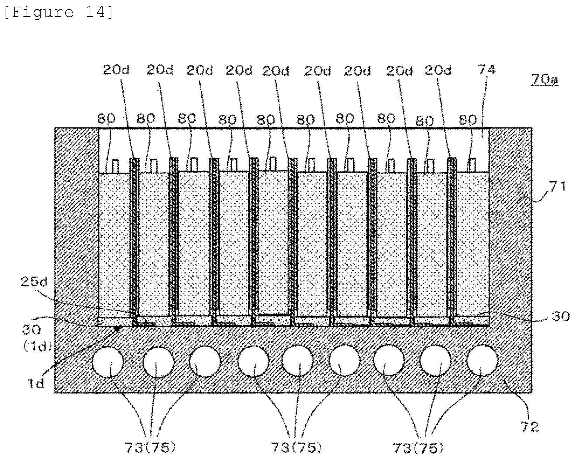

Figure 14 shows a longitudinal sectional view of the battery according to the second embodiment.

In this embodiment, a battery 70a has the bottomed enclosure 71 that opens on one side. The battery 70a is provided with the battery cells 80 as a plurality of heat sources inside the enclosure 71. The battery 70a is provided with the fire spreading prevention unit 1d according to the fifth embodiment inside the enclosure 71. The fire spreading prevention sheets 20d are sandwiched between the battery cells 80. The thermally conductive member 30 is sandwiched between the battery cells 80 and the bottom part 72 (an example of the cooling part) of the enclosure 71. A type of the battery 70a is not limited and the battery 70a is preferably a lithium-ion battery.

In this manner, the battery 70a interposes the fire spreading prevention sheets 20d between the battery cells 80, interposes the thermally conductive member 30 between the battery cells 80 and the bottom part 72 (a member to which heat is to be transferred) of the enclosure 71, and brings the protrusions 25d of the thermally conductive sheets 22 of the fire spreading prevention sheet 20d into contact with the thermally conductive member 30. Therefore, when one of the battery cells 80 overheats, heat can be transferred from the battery cell 80 to the bottom part 72 via the thermally conductive member 30, thermal conduction from the overheated battery cell 80 to an adjacent battery cell 80 can be reduced, and conducted heat can be transferred from the thermally conductive sheets 22 to the thermally conductive member 30 via the protrusions 25d. Of the protrusions 25d, not only end surfaces but at least one surface in the thickness direction can also be used as thermal conduction locations. As a result, heat transfer from the fire spreading prevention sheets 20d to the thermally conductive member 30 can be promoted.

The battery 70a may be provided with the fire spreading prevention units 1e, 1f, and 1g. In addition, the fire spreading prevention sheets 20d may be replaced with the fire spreading prevention sheets 20, 20a, 20b, 20c, 20e, and 20f.

### 3. Other embodiments

While preferred embodiments of the present invention have been described above, the present invention is not limited to the embodiments and various modifications can be made and implemented.

In the fire spreading prevention units 1, 1a, 1b, 1c, 1d, 1e, 1f, and 1g according to the respective embodiments, the rubber sheet 23 may be provided with a large number of depressions that are depressed inward from one surface of the rubber sheet 23. The thermally conductive members 30 and 40 may bring flat plate-like protrusions 25 into contact with the thermally conductive films 32 and 42 instead of bringing L-shaped protrusions 25d into contact with the thermally conductive films 32 and 42.

The heat sources are not limited to the battery cells 80 and include all objects that emit heat such as a circuit substrate and an electronic equipment main body. For example, the heat sources may be electronic components such as a capacitor and an IC chip. The fire spreading prevention units 1, 1a, 1b, 1c, 1d, 1e, 1f, and 1g may be disposed in a structure other than the batteries 70 and 70a such as electronic equipment, an electric home appliance, power generating equipment, or the like.

The plurality of constituent elements of the respective embodiments described above can be freely combined with each other except in cases where they cannot. For example, the protrusions 20 of the fire spreading prevention sheets 20e and 20f may be bent and deformed into the protrusions 25 to be used in the fire spreading prevention units 1d, 1e, 1f, and 1g.

### Industrial Applicability

The present invention is applicable in fields where preventing fire spreading between heat sources or from a heat source to another location is desirable.

## Claims

1. A fire spreading prevention unit, comprising:
a fire spreading prevention sheet disposed to be sandwiched between a plurality of heat sources; and
a thermally conductive member disposed between a member to which heat from the heat sources is to be transferred and the heat sources, wherein
the fire spreading prevention sheet is a multilayer sheet obtained by laminating:
one or two or more rubber sheets;
one or two or more heat resistant sheets with higher heat resistance than the rubber sheets; and
one or two or more thermally conductive sheets with higher thermal conductivity than the rubber sheets and the heat resistant sheets,
the thermally conductive sheets each have a protrusion that protrudes beyond the rubber sheets and the heat resistant sheets and that exposes both surfaces in a thickness direction of the thermally conductive sheet, and
the fire spreading prevention sheet is erected on the thermally conductive member in a state where the protrusion of the thermally conductive sheet is brought into contact with the thermally conductive member.

2. The fire spreading prevention unit of claim 1, wherein
the thermally conductive member includes, in a rubber-like elastic body, a thermally conductive filler with higher thermal conductivity than the rubber-like elastic body, and
the protrusion is inserted into the thermally conductive member from a surface thereof.

3. The fire spreading prevention unit of claim 1, wherein
the thermally conductive member is provided with a molded body made of rubber or resin as a main material and a thermally conductive film with higher thermal conductivity than the molded body,
the thermally conductive film is exposed on an outer surface of the molded body, and
the protrusion is connected to the thermally conductive film.

4. The fire spreading prevention unit of any one of claims 1 to 3, wherein the rubber sheet is a porous sponge sheet.

5. The fire spreading prevention unit of any one of claims 1 to 4, wherein the heat resistant sheet is a sheet containing talc and/or silica.

6. The fire spreading prevention unit of any one of claims 1 to 5, wherein the thermally conductive sheet is a sheet containing graphite and/or an aluminum compound.

7. The fire spreading prevention unit of any one of claims 1 to 6, wherein
the multilayer sheet forms a bag having both surfaces in a thickness direction thereof and at least one end surface connecting both surfaces,
the thermally conductive sheet is disposed inside the bag, and
the thermally conductive sheet causes the protrusion to protrude outward by penetrating the bag.

8. A battery, comprising battery cells as a plurality of heat sources inside an enclosure,
the battery comprising the fire spreading prevention unit of any one of claims 1 to 7 inside the enclosure, wherein
the fire spreading prevention sheet is sandwiched between the battery cells, and
the thermally conductive member is sandwiched between the battery cells and a cooling part of the enclosure.
